# EUROPEAN PATENT SPECIFICATION

(11) **EP 0 225 017 B1**
(45) Date of publication and mention of the grant of the patent: **13.01.1993**
(21) Application number: 86307821.8
(22) Date of filing: 09.10.1986
(51) Int. Cl.: B01D 36/04, B01D 21/04, B01D 33/06

(54) **Filter Apparatus**
Filterapparat
Dispositif de filtration

(30) Priority: 18.10.1985 JP 160490/85
(43) Date of publication of application: 10.06.1987
(73) Proprietor: BUNRI INDUSTRY CO., LTD., Tokyo 140 (JP)
(72) Inventor: Tashiro, Minoru, Setagaya-ku Tokyo 158 (JP); Tashiro, Makoto, Setagaya-ku Tokyo 158 (JP)
(74) Representative: Dixon, Donald Cossar

(56) References cited:
- GB-A- 264 011
- GB-A- 2 124 510
- US-A- 3 334 749
- US-A- 3 498 463
- US-A- 3 540 588
- US-A- 3 840 120
- US-A- 4 437 991

## Description

This invention relates to a filter apparatus for filtering a liquid such as cutting oil or abrading oil by removing solid foreign matter such as cutting chips and abrasive grains from the liquid.

Factories exist in which a variety of machine tools are installed for machining metal materials. These machine tools make use of cutting and abrading oils employed in a circulating manner. The system through which the oil is circulated is provided with a filtration apparatus for filtering the oil by separating the cutting chips or abrasive grains from the cutting or abrading oil containing this foreign matter. One such filtration apparatus known in the art is a mesh filter apparatus.

A mesh filter apparatus is provided with a filter which allows only a liquid to pass therethrough following capture of the foreign matter contained in the liquid, and a scraper adapted to prevent clogging of the filter by scraping off the foreign matter that the filter has captured.

When a cloth filter or wire mesh is used as the filter employed in the aforementioned mesh filter apparatus, the cloth or wire mesh captures the cutting chips or abrasive grains efficiently but these contaminants tend to become caught in the woven or knitted portions of the cloth or wire mesh. Once this occurs, it is very difficult to remove the cutting chips or abrasive grains from the filter. Even though the surface of the filter is scraped by the scraper, the clinging foreign matter cannot be scraped off with ease and the filter cannot be reclaimed in an effective manner.

If a brush is used as the scraper in the above-described mesh filter apparatus, the foreign matter becomes trapped in the brush and grows into a large deposit that detracts from the scraping action of the brush in a short period of time.

In an effort to eliminate the aforementioned drawbacks, the applicant has already developed a mesh filter apparatus in which the filter member is a smooth-surfaced thin sheet having a multiplicity of through-holes, an example of the filter member being a punched metal sheet. Scrapers each comprising a resilient blade are brought into sliding contact with the front and back surfaces of the filter made of the thin sheet. Applications claiming this mesh filter apparatus have been filed in Japan, the U.S.A. and other countries (see the specification of U.S. Patent No. 4,437,991).

Since the front and back surfaces of the sheet are smooth in the disclosed mesh filter apparatus, little of the trapped foreign matter clings to the sheet. Moreover, the scrapers are blade-shaped and therefore these also attract little of the foreign matter. Thus the apparatus is advantageous in that the foreign matter can be scraped off in smooth fashion.

However, a problem is encountered in that the structure of the above-described mesh filter apparatus is such that the mesh filter is disposed across a wide area near the outlet of a tank accommodating the cutting or abrasive oil, and the scrapers are in sliding contact with the front and back surfaces of the mesh filter. In other words, the mesh filter is fixed and the scrapers travel on both sides of the filter. As a result, not only is a large amount of space needed to install the mesh filter apparatus, but the scraper drive mechanism for moving the scrapers is of some complexity.

The present invention has been devised in view of the foregoing circumstances and its object is to provide a structurally simple filter apparatus the filtering performance whereof will not decline even if used over an extended period of time.

According to the present invention we provide a filter apparatus for removing solid foreign matter mixed in with a liquid as defined in Claim 1.

Other features and advantages of the present invention will be apparent from the following description taken in conjunction with the accompanying drawings, in which like reference characters designate the same or similar parts throughout the figures thereof.

In the drawings:
Fig. 1 is a perspective view illustrating the overall structure of a filter apparatus according to the present invention;
Fig. 2 is a sectional view taken along line II-II of Fig. 1;
Fig. 3 is a sectional view taken along line III-III of Fig. 2;
Fig. 4 is a plan view showing the entirety of an apparatus for separating cutting chips from oil by deposition; and
Fig. 5 is a sectional view taken along line V-V of Fig. 4.

Let us first describe the overall structure of a cutting chip separating apparatus employing the filter apparatus of the present invention.

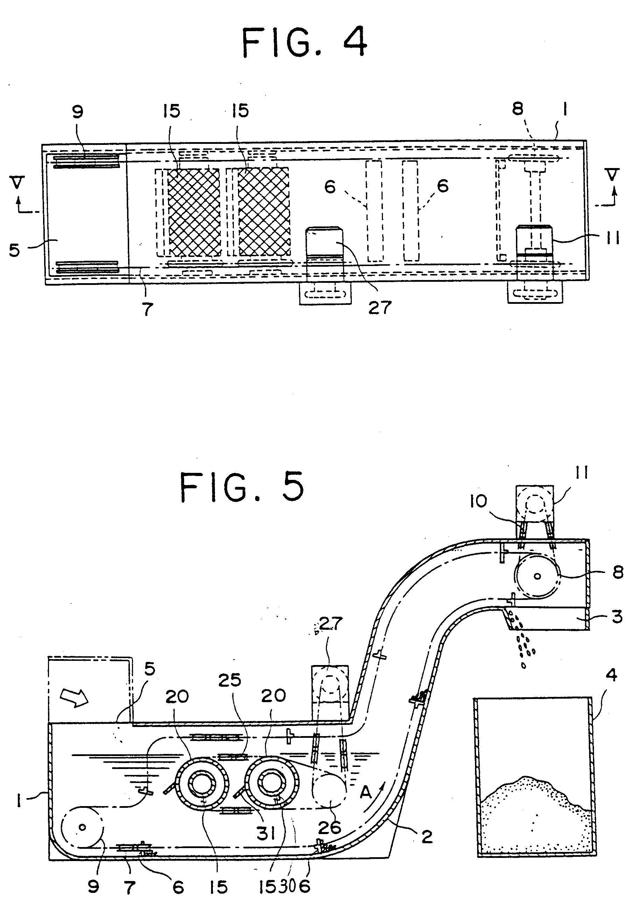

As shown in Figs. 4 and 5, a separating tank 1 receives oil discharged from machine tools and containing foreign matter such as cutting chips. The tank 1 has a bottom wall 2 one end of which is curved and extended upwardly on the right side of the figures. The extended end of the bottom wall 2 is formed to include a discharge chute 3 from which the foreign matter is discharged into a chip receptacle 4 provided below the chute 3.

The upper surface of the separating tank 1 on the left side thereof in the figures is formed to include a charging port 5 into which the oil containing the foreign matter is charged. The arrangement is such that oil containing metal chips such as iron or aluminum or non-metal chips such as glass and plastic, which are produced as the result of machining performed by machine tools, are introduced to the charging port 5 by a pipe or the like, which is not shown.

The apparatus includes a plurality of scrapers 6 which travel while in sliding contact with the bottom wall 2 of separating tank 1. The scrapers 6 are driven by a scraper chain 7 so as to travel along the bottom wall 2 in the direction of arrow A (one way). The scraper chain 7 is stretched between a drive chain sprocket 8 and a driven chain sprocket 9. The drive chain sprocket 8 is rotatively driven by a motor 11 via a drive chain 10.

Cutting chips become mixed in with the oil used in a machining process performed by machine tools in a factory. When the oil containing these chips is introduced into the separating tank 1 through the charging port 5, the comparatively heavy chips settle on the bottom wall 2 of the separating tank 1 under the influence of gravity.

When driven in the direction of arrow A by the motor 11, the scrapers 6 travel along the bottom wall 2 while in sliding contact therewith and thus carry the cutting chips deposited on the bottom wall 2 to the discharge chute 3 while sweeping the chips along the bottom wall. The chips that reach the discharge chute 3 fall into the chip receptacle 4.

Thus, the comparatively heavy cutting chips deposited on the bottom wall 2 by the force of gravity are removed by the scrapers 6.

The separating tank 1 also accommodates a mesh filter apparatus 15 according to the present invention.

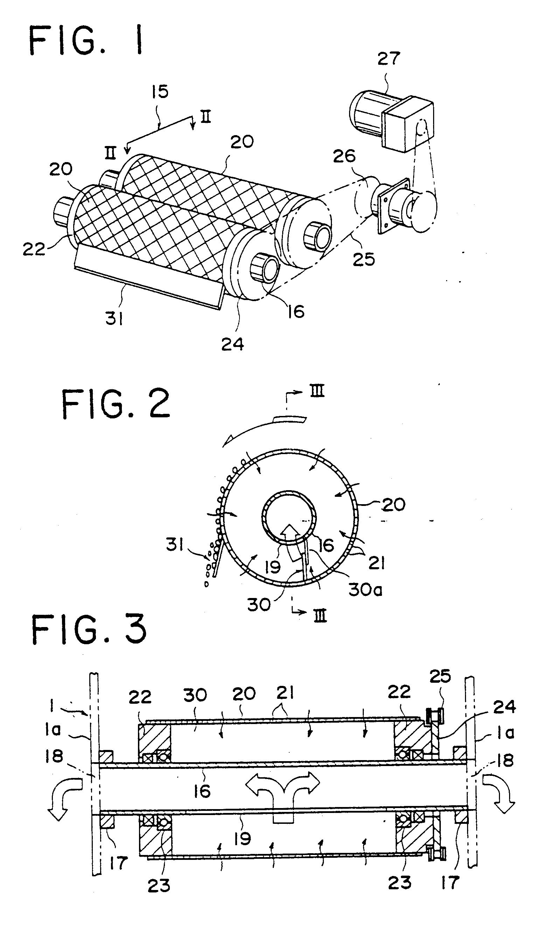

The structure of the mesh filter apparatus 15 according to the invention is illustrated in Figs. 1, 2 and 3. Fig. 1 is a perspective view of the overall apparatus, Fig. 2 a sectional view taken along line II-II of Fig. 1, and Fig. 3 a sectional view taken along line III-III of Fig. 2.

As shown in Figs. 1, 2 and 3, the filter apparatus 15 includes a support shaft 16 that also serves as a discharge pipe. The separating tank 1 has parallel side walls 1a, 1a to which the ends of the shaft 16 are secured by supports 17, 17. The shaft 16 has a lower wall formed to include an inlet 19. The discharge pipe/support shaft 16 has two open ends communicating with outflow ports 18, 18 formed in the two side walls 1a, 1a of the separating tank 1, respectively. Clean cutting oil filtered by the mesh filter apparatus 15 in a manner described below flows out from the outflow ports 18, 18. Though the arrangement is not shown, the outflow ports 18, 18 are connected to a tank which collects the clean cutting oil. Further, it should be noted that the outflow port 18 may be provided in only one side wall 1a of the separating tank 1 and communicated with an opening in only one end of the shaft 16.

Numeral 20 denotes a mesh filter of a structure in which a thin flexible sheet provided with a multiplicity of through-holes 21 is bent and formed into a cylindrical configuration. The thin flexible sheet comprises a sheet of punched metal.

The two ends of the mesh filter 20 formed into the cylinder have respective end caps 22, 22 secured thereto for closing these ends. The end caps 22, 22 also serve to retain the cylindrical shape of the mesh filter 20.

The end caps 22, 22 are freely rotatably supported on the discharge pipe/support shaft 16 by respective bearings 23, 23. Thus, the cylindrically formed mesh filter 20 is freely rotatably mounted on the shaft 16.

A driven chain sprocket 24 is fixedly secured to one end cap 22 of the two end caps 22, 22, and a chain 25 is wound around the driven chain sprocket 24. The chain 25 is also wound around a drive chain sprocket 26, which is rotatively driven by a motor 27 arranged on the upper surface of the separating tank 1. The cylindrically formed mesh filter 20 is thus rotated by the motor 27.

It should be noted that an arrangement can be adopted in which, rather than using the motor 27, the driven chain sprocket 24 is rotated by being operatively associated with the scraper chain 7 or by a driving force obtained from the motor 11.

The filter apparatus 15 includes a scraper 31 arranged on the outer side of the cylindrical mesh filter 20 in such a manner that its leading edge is in abutting contact with the surface of the mesh filter 20. Besides the scraper 31 on the outer side, there is also provided on the inner side of the cylindrical mesh filter 20 a second scraper 30 arranged so that its leading edge abuts against the inner surface of the filter 20.

The scraper 31 is secured to a bracket (not shown) spanning the two side walls 1a, 1a of the separating tank 1, and the scraper 30 is secured to the discharge pipe/support shaft 16 by a bracket 30a.

In the illustrated embodiment, a cylindrically formed mesh filter 20 is provided at each of two locations, the two filters are used in side-by-side relation and are arranged in the cutting oil accommodated by the separating tank 1 . However, the mesh filters 20 are not limited to two in number. It should be obvious that one mesh filter 20 can be provided and that the number of filters can be increased to three or more if the occasion demands.

The operation of the mesh filter apparatus 15 having the above construction will now be described.

In the separating tank 1, those cutting chips contained in the oil introduced from the charging port 5 that are comparatively heavy in weight deposit on the bottom wall 2 by settling. Meanwhile, the cutting chips and other particulate matter of comparatively light weight remain mixed in the oil in a floating state. The oil in which the comparatively light cutting chips and particles are mixed flows into the mesh filter 20 upon passing through the through-holes 21 possessed by the mesh filter 20. In passing through the holes 21, the cutting chips and particulate foreign matter are trapped by the filtering action of the holes 21, so that the oil which flows into the mesh filter 20 is filtered, clean oil. The clean oil flows into the discharge pipe/support shaft 16 from the inlet 19 and is received by the tank (not shown) which recovers the filtered oil from the outflow ports 18, 18.

The foreign matter trapped by the through-holes 21 of the mesh filter 20 is scraped off the mesh filter by the scrapers 30, 31 due to rotation of the mesh filter. The portion of the mesh filter 20 which has been scraped by the scrapers 30, 31 is free of foreign matter and, hence, is in a reclaimed state.

The foreign matter scraped off by the scraper 31 returns to the cutting oil in separating tank 1 and grows into a comparatively heavy particulate mass which deposits on the bottom wall 2. This is then collected by the chip receptacle 4 via the discharge chute 3 by the action of the scrapers 6. Though the foreign matter scraped off the scraper 30 mixes in with the clean oil that flows through the discharge pipe/support shaft 16, the foreign matter that attaches itself to the inner side of the mesh filter 20 contains only a trace amount of solid particulate matter. When scraped off by the scraper 30, therefore, this amount of foreign matter will offer almost no difficulty even if is mixes with the clean oil.

In accordance with the mesh filter apparatus 15 having the above-described construction, the mesh filter 20 is formed into a cylindrical configuration. Therefore, assuming that the effective capture area of the filter is the same as in the prior art, the cylindrical configuration allows the space needed for installation of the filter to be reduced in comparison with the simple planar filter arrangement used conventionally. Conversely speaking, the effective capture area can be enlarged if the space available is the same. This enables the filtration capability to be improved.

In the embodiment set forth above, an example is described in which oil containing foreign matter such as cutting chips flows out from machine tools. However, the filter apparatus of the invention is not limited to this embodiment but can be widely utilized as a filter apparatus for removing solid foreign matter from any liquid.

## Claims

1. A filter apparatus for removing solid foreign matter from a liquid containing cutting chips which are discharged from cutting machines or polishing machines, comprising:
at least one cylindrical mesh filter (15) consisting of a flexible and thin metallic sheet (20) formed into a cylinder and having a smooth surface perforated by a multiplicity of through-holes (21), the filter being rotatable by a drive mechanism (24-27),
a tank for receiving said liquid and containing said filter (20) concentrically around a shaft (16) which serves as a discharge pipe to discharge liquid which has passed through the mesh filter (20) and as a support which rotatably supports the filter, at least one end of the shaft passing through a wall of the tank, and
first and second stationary scrapers (30,31) each having a leading edge secured in abutting contact respectively with the inner and outer surface of the filter (20);
whereby in use liquid containing said solid foreign matter is passed from the outside of said filter (15) through the holes (21) by virtue of a head between a height of the liquid level in the tank and that of the discharge pipe (16) and said foreign matter is trapped by said through holes and is scraped by the rotation of the filter off the outer and inner surfaces of the filter by the first and second scrapers (30,31), and clean liquid filtered by the filter is discharged from the tank by passing within said shaft.

2. Apparatus according to Claim 1, wherein said tank (1) has a bottom wall (2) provided with at least one third scraper (6) which travels along an inner face (2) of said bottom while in sliding contacts therewith, for removing solid foreign matter deposited on said bottom.

3. Apparatus according to Claim 2, wherein said drive mechanism (24-26) of said filter (15) and the mechanism (7-10) for driving said third scraper are both driven by the same driving source (11).

4. Apparatus according to Claim 2 or 3, wherein each third scraper (6) is secured to a scraper chain (7) at prescribed intervals.

## Patentansprüche

1. Filterapparat zum Entfernen von Fremdkörpern aus einer Flüssigkeit, insbesondere von Schneidspänen, die von Schneid- oder Poliermaschinen abgegeben werden, umfassend:
wenigstens einen zylindrischen Siebfilter (15), bestehend aus einem flexiblen und dünnen Metallblech (20), das zu einem Zylinder geformt ist und eine glatte Oberfläche aufweist, die durch eine Vielzahl von durchgehenden Löchern (21) perforiert ist, wobei der Filter durch einen Antriebsmechanismus (24-27) drehbar ist,
einen Tank zur Aufnahme der Flüssigkeit, in welchem die Filter (20) konzentrisch um eine Welle (16) angeordnet sind, die als Auslaßrohr zum Ablassen von Flüssigkeit, die das Siebfilter (20) passiert hat, und als Abstützung dient, die den Filter drehbar abstützt, wobei wenigstens ein Ende der Welle eine Wand des Tanks durchsetzt, und
erste und zweite stationäre Schaber (30, 31) mit jeweils einer vorlaufenden Kante, die in Anlagekontakt mit der inneren bzw. äußeren Fläche des Filters (20) steht,
wobei im Gebrauch feste Fremdstoffe enthaltende Flüssigkeit von der Außenseite des Filters (15) unter der Wirkung einer Druckdifferenz zwischen der Oberfläche des Flüssigkeitsniveaus und dem Auslaßrohr (16) durch die Löcher (21) gedrückt wird und die besagten Fremstoffe durch die Filteröffnungen zurückgehalten und durch die Rotation des Filters sowohl von dessen Außenseite als auch dessen Innenseite durch die beiden Schaber (30, 31) abgeschabt werden und die gereinigte, durch den Filter filtrierte Flüssigkeit vom Tank über die hohle Welle ausgetragen wird.

2. Apparat nach Anspruch 1, dadurch gekennzeichnet, daß der Tank (1) eine Bodenwand (2) aufweist, die mit wenigstens einem dritten Schaber (6) versehen ist, der längs der Innenfläche (2) des Bodens im Gleitkontakt damit verschiebbar ist, um Fremdstoffe, die sich auf diesem Boden abgesetzt haben, zu entfernen.

3. Apparat nach Anspruch 2, dadurch gekennzeichnet, daß der Antriebsmechanismus (24-26) des Filters (15) und der Mechanismus (7-10) zum Antreiben des dritten Schabers beide durch die gleiche Antriebsquelle (11) betrieben sind.

4. Apparat nach Anspruch 2 oder 3, dadurch gekennzeichnet, daß jeder der dritten Schaber (6) in vorgegebenen Abständen an einer Schaberkette (7) befestigt ist.

## Revendications

1. Dispositif de filtration pour éliminer la matière étrangère solide d'un liquide contenant des copeaux d'usinage déchargés par des machines d'usinage ou des machines de polissage, comprenant :
au moins un filtre à tamis circulaire(15), consistant en une tôle métallique (20) flexible et mince, formée en cylindre et présentant une surface lisse, perforée par une pluralité de trous traversants (21), le filtre étant susceptible d'être entraîné en rotation au moyen d'un mécanisme d'entraînement (24 à 27),
un réservoir pour recevoir ledit liquide et contenant ledit filtre (20), disposé concentriquement autour d'un arbre (16) qui sert de tuyau de refoulement au liquide de décharge qui est passé à travers le filtre à tamis (20) et de support, en supportant à rotation le filtre, au moins une extrémité de l'arbre passant par la paroi du réservoir, et
des premier et deuxième racleurs (30,31) présentant chacun un bord d'attaque fixé en contact de mise en butée respectivement avec les surfaces intérieure et extérieure du filtre (20);
de manière qu'en fonctionnement, le liquide contenant ladite matière étrangère solide soit passée de l'extérieur dudit filtre (15), par les trous (21), grâce à une hauteur de liquide entre la hauteur du niveau de liquide dans le réservoir et la hauteur dans le tuyau de refoulement (16) et ladite matière étrangère étant piégée par lesdits trous traversants et râclée par la rotation du filtre, pour être extraite des surfaces extérieure et intérieure du filtre, par les premier et second racleurs (30,31), et le liquide épuré par la filtration opérée à l'aide du filtre étant déchargé du réservoir en passant à l'intérieur dudit arbre.

2. Dispositif selon la revendication 1, dans lequel ledit réservoir (1) présente une paroi inférieure (2) pourvue d'au moins un troisième racleur (6), qui se déplace sur une surface intérieure (2) dudit fond tout en étant en contact de glissement avec lui, afin d'enlever la matière étrangère solide déposée sur ledit fond.

3. Dispositif selon la revendication 2, dans lequel ledit mécanisme d'entraînement (24 à 26) dudit filtre (15) et le mécanisme (7 à 10) destiné à l'entraînement dudit troisième racleur sont tous deux entraînés par la même source d'entraînement (11).

4. Dispositif selon la revendication 2 ou 3, dans lequel chaque troisième racleur (6) est fixé à une chaîne de raclage (7), à des intervalles prédéterminés.
